(19) Europäisches Patentamt
European Patent Office
Office européen des brevets

(11) Veröffentlichungsnummer: **0 009 244**
**B1**

# (12) EUROPÄISCHE PATENTSCHRIFT

(45) Veröffentlichungstag der Patentschrift: **02.06.82**

(51) Int. Cl.³: **C 08 F 10/00**, C 08 F 4/64

(21) Anmeldenummer: **79103539.7**

(22) Anmeldetag: **20.09.79**

(54) **Verfahren zum Herstellen von Homo- und Copolymerisaten von Alpha-Monoolefinen.**

(30) Priorität: **25.09.78 DE 2841715**

(43) Veröffentlichungstag der Anmeldung: **02.04.80 Patentblatt 80/7**

(45) Bekanntmachung des Hinweises auf die Patenterteilung: **02.06.82 Patentblatt 82/22**

(84) Benannte Vertragsstaaten: **AT BE DE FR GB IT**

(56) Entgegenhaltungen:
**HIGH POLYMERS, Band XX, Teil 1, 1965, Interscience, Seite 371, New York, U.S.A. R.A.V. RAFF et al.: »Crystalline Olefin Polymers«**

(73) Patentinhaber: **BASF Aktiengesellschaft, Carl-Bosch-Strasse 38, D-6700 Ludwigshafen (DE)**

(72) Erfinder: **Klaerner, Peter, Dr. Dipl.-Chem., Hauptstrasse 62, D-6719 Battenberg (DE)**
Erfinder: **Staiger, Gerhard, Dr. Dipl.-Chem., Virchowstrasse 26, D-6712 Bobenheim-Roxheim 2 (DE)**
Erfinder: **Bronstert, Klaus, Dr. Dipl.-Chem., Gartenstrasse 26, D-6719 Carlsberg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Verfahren zum Herstellen von Homo- und Copolymerisaten von $\alpha$-Monoolefinen

Die vorliegende Erfindung betrifft ein Verfahren zum Herstellen von Homo- und Copolymerisaten von $C_2$- bis $C_6$-Monoolefinen durch Polymerisation des bzw. der Monomeren bei Temperaturen im Bereich von 30 bis 200°C unter Drücken im Bereich von 0,1 bis 200 bar mittels eines Ziegler-Natta-Katalysators aus (I) einer Titanchlorid-Komponente und (II) einer Aluminiumalkyl-Komponente der allgemeinen Formel $AlR_3$ bzw. $ClAlR_2$ — worin R für einen $C_1$- bis $C_8$-Alkylrest steht — im Atomverhältnis Titan aus der Katalysatorkomponente (I) : Aluminium aus der Katalysatorkomponente (II) von 1 : 1 bis 1 : 100.

Verfahren dieser Art haben sich in der Technik gut bewährt, lassen jedoch noch eine Reihe kleinerer oder größerer Wünsche offen. So ist es z. B. die einzusetzende Titanchlorid-Komponente (I), die manchen Vorstellungen nicht ganz gerecht wird. Es ist beispielsweise zwar gelungen, Titanchlorid-Komponenten (I) durch physikalische und/oder chemische Modifikationen der mannigfachsten Art »hochzuzüchten« etwa in dem Sinne, daß die Polymerisate in besonders hohen Katalysatorausbeuten (= Menge Polymerisat pro Mengeneinheit Katalysator) und/oder mit besonders hoher Kristallinität (= in siedendem Heptan unlöslicher Anteil) erhältlich werden — muß dafür aber einen spürbaren verfahrenstechnischen Nachteil in Kauf nehmen: Die hochaktiven Titanchlorid-Komponenten (I) ergeben beim Zusammentreffen mit der Aluminiumalkyl-Komponente (II) einen Katalysator, der sofort »anspringt«, d. h. zeitlich unmittelbar nach dem Zusammentreffen die Polymerisation einleitet. Dies ist, insbesondere bei der kontinuierlichen Polymerisation, in hohem Maße unerwünscht: Beim Einbringen, insbesondere beim Nachschub, der Titanchlorid-Komponente (I) in den Polymerisationsraum bildet sich mit dort vorhandener Aluminiumalkyl-Komponente (II) schon an der Einbringvorrichtung etwas — sofort aktiver — Katalysator, was — durch sofort gebildetes Polymerisat — zu Verstopfungen in den Einbringvorrichtungen und damit letztlich zu Betriebsunterbrechungen führen kann.

Dementsprechend war es eine Aufgabenstellung zur vorliegenden Erfindung, eine technisch fortschrittliche Titanchlorid-Komponente (I) aufzuzeigen, insbesondere eine solche, die es nicht nur ermöglicht, die Polymerisate in wünschenswert hohen Katalysatorausbeuten und wünschenswert hoher Kristallinität zu erhalten, sondern auch die Eigenschaft hat, beim Zusammentreffen mit der Aluminiumalkyl-Komponente (II) erst nach Ablauf einer gewissen, hinreichend langen Zeitspanne (Induktionsperiode) polymerisationsaktiv zu werden.

Es wurde gefunden, daß die gestellte Aufgabe gelöst werden kann mit einer Titanchlorid-Komponente, die man erhält, wenn man eine einschlägig übliche Titantri- bzw. Titantetrachlorid-Komponente in bestimmter Weise einer Kohlendioxidatmosphäre aussetzt.

Gegenstand der vorliegenden Erfindung ist dementsprechend ein Verfahren zum Herstellen von Homo- und Copolymerisaten von $C_2$- bis $C_6$-$\alpha$-Monoolefinen durch Polymerisation des bzw. der Monomeren bei Temperaturen im Bereich von 30 bis 200°C unter Drücken im Bereich von 0,1 bis 200 bar mittels eines Ziegler-Natta-Katalysators aus (I) einer Titanchlorid-Komponente und (II) einer Aluminiumalkyl-Komponente der allgemeinen Formel $AlR_3$ bzw. $ClAlR_2$ — worin R für einen $C_1$- bis $C_8$-Alkylrest steht — im Atomverhältnis Titan aus der Katalysator-Komponente (I) : Aluminium aus der Katalysator-Komponente (II) von 1 : 1 bis 1 : 100. Das erfindungsgemäße Verfahren ist dadurch gekennzeichnet, daß die eingesetzte Titanchlorid-Komponente (I) eine solche ist, die erhalten wird, indem man eine einschlägig übliche, aus Titantri- bzw. Titantetrachlorid bestehende oder im wesentlichen aus Titantri- bzw. Titantetrachlorid bestehende Katalysator-Komponente bei einer Temperatur im Bereich von −20 bis 100, vorzugsweise 0 bis 50 und insbesondere 10 bis 30°C über eine Zeitspanne im Bereich von 0,5 bis 60, vorzugsweise 1 bis 30 und insbesondere 5 bis 15 Minuten einer Kohlendioxidatmosphäre eines Druckes im Bereich von 0,1 bis 10, vorzugsweise 0,2 bis 5 und insbesondere 0,5 bis 1 bar aussetzt.

Zu dem erfindungsgemäßen Verfahren ist im einzelnen das folgende zu bemerken:

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, Lösungs-Polymerisationsverfahren oder Trockenphasen-Polymerisationsverfahren. Die erwähnten technologischen Ausgestaltungen — mit anderen Worten: die technologischen Varianten der Polymerisation von $\alpha$-Monoolefinen nach Ziegler-Natta — sind aus der Literatur und Praxis wohlbekannt, so daß sich nähere Ausführungen zu ihnen erübrigen. Zu bemerken ist allenfalls noch, daß die neue Titanchlorid-Komponente (I) — wie entsprechende bekannte Katalysator-Komponenten — z. B. außerhalb oder innerhalb des Polymerisationsgefäßes mit der Aluminiumalkyl-Komponente (II) zusammengebracht werden kann; im letztgenannten Falle etwa durch räumlich getrennten Eintrag der Komponenten, die im übrigen in Form einer Suspension [Komponente (I)] bzw. Lösung [Komponente (II)] gehandhabt werden können. Zu bemerken ist weiterhin, daß sich das neue Verfahren vornehmlich zum Herstellen von Homopolymerisaten des Propylens sowie Copolymerisaten des Propylens mit untergeordneten Mengen Äthylen eignet. Es kommt ferner in Betracht zum Herstellen von Homopolymerisaten des Äthylens, zum Herstellen von

Copolymerisaten des Äthylens sowie Propylens mit höheren $\alpha$-Monoolefinen und zum Herstellen von Homopolymerisaten höherer $\alpha$-Monoolefine wie Buten-1, 4-Methylpenten-1 und Hexen-1. Die Regelung der Molekulargewichte der Polymerisate kann in einschlägig üblicher Weise erfolgen, insbesondere mittels Wasserstoff als Regulans.

Zu der neuen Titanchlorid-Komponente (I) selbst ist das folgende zu sagen:

Als Ausgangsstoffe dienen einschlägig übliche, aus Titantri- bzw. Titantetrachlorid bestehende oder im wesentlichen aus Titantri- bzw. Titantetrachlorid bestehende Katalysator-Komponenten. Diese setzen sich bekanntlich im wesentlichen aus sechs Gruppen zusammen:

a) Titantrichloride als solche und Titantrichlorid-Cokristallisate mit Metallhalogeniden, insbesondere Aluminiumchlorid, etwa der Formel

$$TiCl_3 \cdot \frac{1}{3} AlCl_3.$$

Siehe hierzu die US-PS 3 128 252 und 3 814 743.
Wie sich gezeigt hat, ist aus dieser Gruppe für den erfindungsgemäßen Zweck besonders gut geeignet ein sehr feinteiliges Cokristallisat der Formel

$$TiCl_3 \cdot \frac{1}{3} AlCl_3.$$

b) Mit Elektronendonatoren bzw. Lewis-Basen modifizierte Titantrichloride bzw. Titantrichlorid-Cokristallisate der unter a) bezeichneten Art. Derartige modifizierte Titantrichlorid-Katalysatorkomponenten gibt es in besonders großer Vielfalt, da sie bekanntlich eine Reihe von Vorteilen mit sich bringen. Um unnötige Wiederholungen zu vermeiden, sei im gegebenen Zusammenhang schlaglichtartig beispielsweise verwiesen auf die GB-PS 851 113, die FR-PS 1 231 089 sowie die DE-OS 2 301 136, 2 400 190, 2 441 541 und 2 519 582.
Für den erfindungsgemäßen Zweck kommen aus diesen Gruppen vor allem in Betracht sehr feinteilige Cokristallisate der Formel

$$TiCl_3 \cdot \frac{1}{3} AlCl_3,$$

welche mit den folgenden Donatoren bzw. Basen modifiziert sind: Äthern, wie dem Diisoamyläther und dem Di-n-propyläther; Estern, wie dem Benzoesäureisoamylester und dem Phenylessigsäureäthylester; Phosphinen, wie dem Tributylphosphin; Phosphinoxiden, wie dem Tributylphosphinoxid; sowie Säureamiden, wie dem Hexamethylphosphorsäuretriamid. Hierbei ist es im allgemeinen günstig, wenn das Molverhältnis Cokristallisat : Donator bzw. Base etwa 1 : 12 bis 1 : 2 beträgt.

c) Sogenannte »voraktivierte« Titantrichloride bzw. Titantrichlorid-Cokristallisate der unter a) bezeichneten Art. Dies sind bekanntlich Titantrichlorid-Katalysatorkomponenten, die vor dem eigentlichen Zusammenbringen mit der Aluminiumalkyl-Komponente (II) mit Aluminiumalkyl-Verbindungen des nämlichen Typs voraktiviert sind. Häufig geht man dabei von Titantetrachlorid aus, das durch die Aluminiumalkyl-Verbindung zu Titantrichlorid reduziert wird.

d) Titantrichloride und deren Cokristallisate, die sowohl mit Elektronendonatoren bzw. Lewis-Basen modifiziert als auch voraktiviert sind. Solche Titantrichlorid-Katalysatorkomponenten können in gewisser Weise als eine Kombination der unter b) und c) bezeichneten aufgefaßt werden. Ein typisches Beispiel ist der DE-OS 2 335 047 zu entnehmen.

e) Titantetrachlorid als solches, das bei Katalysatoren des Ziegler-Natta-Typs üblich ist.

f) Titantetrachlorid, das chemisch und/oder physikalisch modifiziert — z. B. mit Trägerstoffen kombiniert — ist.

Wie sich gezeigt hat, ist für den erfindungsgemäßen Zweck besonders gut geeignet ein modifiziertes Titantetrachlorid, das man erhält, wenn man zunächst

(1) in einer ersten Stufe

(1.1) 100 Gew.-Teile eines Alkoholats der allgemeinen Formel $Mg(OD)_2$, worin D steht für eine 1 bis 6, vorzugsweise 2 bis 4 Kohlenstoffatome aufweisende Alkylgruppe; mit

(1.2) soviel Gewichtsteilen eines Chlortoluols der Formel

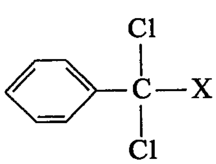

worin X steht für Chlor oder Wasserstoff, vorzugsweise Chlor, wie sie einem Molverhältnis Alkoholat (1.1) : Chlor in dem Chlortoluol (1.2) von 100 : 1 bis 100 : 100, vorzugsweise 100 : 3 bis 100 : 30 entsprechen;

in einer Kugelschwingmühle unter einer Mahlbeschleunigung von 30 bis 80, vorzugsweise 45 bis 55 $m \times sec^{-2}$ über eine Zeitspanne von 5 bis 100, vorzugsweise 10 bis 60 Stunden bei einer Temperatur von −50 bis +10, vorzugsweise −30 bis −5°C in Abwesenheit von Verdünnungsmitteln miteinander vermahlt; dann

(2) in einer zweiten Stufe

(2.1) 100 Gew.-Teile des aus Stufe (1) resultierenden Stoffes mit

(2.2) 300 bis 1800, vorzugsweise 500 bis 1000 Gew.-Teilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 70 bis 90°C hält und den dabei resultierenden Feststoff unter Abtrennung überschüssigen Titantetrachlorids isoliert und schließlich

(3) in einer dritten Stufe

(3.1) 100 Gew.-Teile des aus Stufe (2) resultierenden Feststoffes erneut mit

(3.2) 300 bis 1800, vorzugsweise 500 bis 1000 Gew.-Teilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 120 bis 140°C hält und den dabei resultierenden Feststoff unter Abtrennung überschüssigen Titantetrachlorids isoliert.

Zur stofflichen Seite eines derart erhältlichen modifizierten Titantetrachlorids f) ist zu bemerken:

Magnesiumalkoholate (1.1) der in Betracht kommenden Art sind wohlbekannt, so daß auf sie nicht näher eingegangen zu werden braucht. Zu erwähnen ist allenfalls, daß die besonders gut geeigneten Alkoholate sich ableiten vom Äthyl-, n-Propyl-, i-Propyl-, n-Butyl-, sec.-Butyl- und tert.-Butylalkohol.

Auch die Chlortoluole (1.2) der in Betracht kommenden Art gehören als solche zum wohlbekannten Stand der Technik, womit auf sie ebenfalls nicht näher eingegangen zu werden braucht.

Das zu verwendende Titantetrachlorid (2.2) bzw. (3.2) sollte zweckmäßigerweise von der Art sein, die üblicherweise für Polymerisationskatalysatoren eingesetzt wird.

Das Herstellen des in der beschriebenen Weise modifizierten Titantetrachlorids f) ist einfach und für den Fachmann ohne Erläuterungen möglich. Lediglich zu den Stufen (2) und (3) ist zu erwähnen, daß die Isolierung des jeweils resultierenden Feststoffes zweckmäßigerweise durch Absaugen und die Abtrennung überschüssigen Titantetrachlorids zweckmäßigerweise durch Waschen mit einem flüssigen Kohlenwasserstoff — bis dieser kein Titantetrachlorid mehr aufnimmt — erfolgt. Der hierbei in Betracht kommende flüssige Kohlenwasserstoff kann ein Kohlenwasserstoff der Art sein, die üblicherweise mit Titanchlorid-Komponenten für Katalysatoren des Ziegler-Natta-Typs ohne Schaden für den Katalysator bzw. dessen Titanchlorid-Komponente zusammengebracht wird — z. B. bei der Polymerisation von $\alpha$-Monoolefinen. Als Beispiele für geeignete Kohlenwasserstoffe seien genannt: Pentane, Hexane, Heptane, Benzine und Cyclohexan.

Die Behandlung der als Ausgangsstoffe dienenden, im vorstehenden abgehandelten primären — an sich einschlägig üblichen — Titanchlorid-Katalysatorkomponenten mit Kohlendioxid, kann in einfacher Weise so erfolgen, wie man üblicherweise feinteilige Feststoffe bzw. Flüssigkeiten mit reaktiven Gasen umsetzt. Die entsprechenden Verfahrensweisen und Vorrichtungen sind wohlbekannt, so daß hier nicht näher darauf eingegangen zu werden braucht. Erwähnt sei lediglich, daß sich ein strenger Ausschluß von Feuchtigkeit empfiehlt, ebenso von Sauerstoff.

## Beispiel 1

### Herstellung der Titanchlorid-Komponente (I)

In einer für die Umsetzung feinteiliger Feststoffe mit reaktiven Gasen üblichen Vorrichtung (Begasungskolben) werden 10 g der als Ausgangsmaterial dienenden primären Titanchlorid-Katalysatorkomponente (die erhalten worden ist durch intensives Trockenvermahlen eines Cokristallisats der Formel

$$TiCl_3 \cdot \frac{1}{3} AlCl_3$$

mit Tributylphosphin im Molverhältnis 1 : 0,17) unter Ausschluß von Feuchtigkeit mit getrocknetem Kohlendioxid begast, derart, daß die primäre Katalysatorkomponente bei einer Temperatur von 22°C über eine Zeitspanne von 5 Minuten einer Kohlendioxidatmosphäre eines Druckes von 0,95 bar ausgesetzt ist.

Polymerisation

In einer mit trockenem Argon gespülten Glasapparatur, bestehend aus einem 2-l-Vierhalskolben, Rückflußkühler, Rührer sowie einer Vorrichtung zum kontrollierten Gaseinleiten über Rotameter im Eingang und Ausgang (zur Ermittlung der verbrauchten Menge an Propylen in Abhängigkeit von der Zeit), werden 0,75 l trockenes n-Heptan vorgelegt und bei 60°C mit reinem, unter einem Druck von 1,05 bar stehendem Propylen gesättigt. Unter weiterer Durchleitung von unter gleichem Druck stehendem Propylen werden dann nacheinander, zuerst 10 mMol Diäthylaluminiumchlorid (als Aluminiumalkylkomponente II), 2 mMol Octadecyl-3-(3,5-di-tert.butyl-4-hydroxyphenyl)-propionat (als Promotor) und dann die nach der Behandlung mit Kohlendioxid erhaltene Titanchlorid-Komponente (I) in einer Menge von 4 mMol (gerechnet als Titantrichlorid) zugesetzt. Sodann wird unter weiterer konstanter und kontinuierlicher Durchleitung von Propylen über eine Zeitspanne von 180 Minuten polymerisiert. Das Polymerisationsergebnis ist der nachstehenden Tabelle zu entnehmen, in der auch die nach 0,5, nach 1, nach 10 und nach 30 Minuten — vom Zeitpunkt der Zugabe der Titanchlorid-Komponente ab — erreichte Polymerisationsgeschwindigkeit angegeben ist.

Vergleichsversuch

Es wird in Identität mit Beispiel 1 gearbeitet, mit der einzigen Ausnahme, daß bei der Titanchlorid-Katalysatorkomponente die Behandlung mit Kohlendioxid unterblieben ist. Die Ergebnisse sind ebenfalls der Tabelle zu entnehmen.

Beispiel 2

Herstellung der Titanchlorid-Komponente (I)

A) Herstellen der primären Titanchlorid-Komponente:
(1) In der ersten Stufe werden
(1.1) 100 Gew.-Teile Magnesiumäthylat, $Mg(OC_2H_5)_2$, mit
(1.2) soviel Gew.-Teilen Benzotrichlorid, wie sie einem Molverhältnis Alkoholat (1.1) : Chlor in dem Benzotrichlorid (1.2) von 100 : 16,7 entsprechen,
in einer Kugelschwingmühle unter einer Mahlbeschleunigung von 50 m × $sec^{-2}$ über eine Zeitspanne von 30 Stunden bei einer Temperatur von −20°C in Abwesenheit von Verdünnungsmitteln miteinander vermahlen.
(2) In der zweiten Stufe werden
(2.1) 100 Gew.-Teile des aus Stufe (1) resultierenden Stoffes mit
(2.2) 750 Gew.-Teilen Titantetrachlorid
zusammengebracht und das Ganze unter ständigem Rühren 1 Stunde auf einer Temperatur im Bereich von 80 bis 85°C gehalten. Danach wird der resultierende Feststoff durch Filtration und Nachwaschen mit n-Heptan isoliert, wobei das Nachwaschen so lange erfolgt, bis sich im Filtrat kein Titantetrachlorid mehr nachweisen läßt.
(3) In der dritten Stufe werden
(3.1) 100 Gew.-Teile des aus Stufe (2) resultierenden Feststoffes erneut mit
(3.2) 750 Gew.-Teilen Titantetrachlorid
zusammengebracht und das Ganze unter ständigem Rühren 1 Stunde auf einer Temperatur im Bereich von 128 bis 132°C gehalten. Danach wird der resultierende Feststoff durch Filtration und Nachwaschen mit n-Heptan isoliert, wobei das Nachwaschen so lange erfolgt, bis sich im Filtrat kein Titantetrachlorid mehr nachweisen läßt.

Auf diese Weise wird eine primäre Titanchlorid-Komponente erhalten, die einen Titangehalt von etwa 6 Gew.-%, einen Chlorgehalt von etwa 60 Gew.-% sowie einen Magnesiumgehalt von etwa 20 Gew.-% aufweist.

B) Behandlung der primären Titanchlorid-Komponente mit Kohlendioxid:
Sie erfolgt ohne Abweichung in Analogie zu Beispiel 1.

Polymerisation

Sie erfolgt ebenfalls in Analogie zu Beispiel 1 mit den Abweichungen, daß (i) anstelle des Diäthylaluminiumchlorids die gleiche Menge Triäthylaluminium, (ii) anstelle des Octadecyl-3-(3,5-di-tert.butyl-4-hydroxyphenyl)-propionats die gleiche Menge Anissäureäthylester und (iii) anstelle der 4 mMol der Titanchlorid-Komponente 0,3 g der oben beschriebenen Titanchlorid-Komponente eingesetzt werden. Die Ergebnisse sind der Tabelle zu entnehmen.

Vergleichsversuch

Es wird in Identität mit Beispiel 2 gearbeitet, mit der einzigen Ausnahme, daß bei der Titanchlorid-Katalysator-Komponente die Behandlung mit Kohlendioxid unterblieben ist. Die Ergebnisse sind wiederum der Tabelle zu entnehmen.

| Beispiel bzw. Vergl.-Vers. | Polymerisat Menge*) [g] | krist. Ant.**) [%] | Polymerisationsgeschwindigkeit [l Propylen/h] nach 0,5 Min. | 1 Min. | 10 Min. | 30 Min. |
|---|---|---|---|---|---|---|
| 1 | 132 | 96,1 | 0 | 0 | 1 | 10 |
| A | 118 | 95,5 | 8 | 8 | 10 | 10 |
| 2 | 727 | 96,0 | 0 | 0 | 40 | 50 |
| B | 735 | 96,4 | 50 | 60 | 50 | 50 |

*) nach 3 Stunden.
**) in siedendem Heptan unlöslicher Anteil.

**Patentanspruch**

Verfahren zum Herstellen von Homo- und Copolymerisaten von $C_2$- bis $C_6$-$\alpha$-Monoolefinen durch Polymerisation des bzw. der Monomeren bei Temperaturen im Bereich von 30 bis 200° C unter Drücken im Bereich von 0,1 bis 200 bar mittels eines Ziegler-Natta-Katalysators aus (I) einer Titanchlorid-Komponente und (II) einer Aluminiumalkyl-Komponente der allgemeinen Formel $AlR_3$ bzw. $ClAlR_2$ — worin R für einen $C_1$- bis $C_8$-Alkylrest steht — im Atomverhältnis Titan aus der Katalysator-Komponente (I) : Aluminium aus der Katalysator-Komponente (II) von 1 : 1 bis 1 : 100, dadurch gekennzeichnet, daß die eingesetzte Titanchlorid-Komponente (I) eine solche ist, die erhalten wird, indem man eine einschlägig übliche, aus Titantri- bzw. Titantetrachlorid bestehende oder im wesentlichen aus Titantri- bzw. Titantetrachlorid bestehende Katalysator-Komponente bei einer Temperatur im Bereich von −20 bis 100° C über eine Zeitspanne im Bereich von 0,5 bis 60 Minuten einer Kohlendioxidatmosphäre eines Druckes im Bereich von 0,1 bis 10 bar aussetzt.

**Claim**

A process for the preparation of homopolymers and copolymers of $C_2-C_6$-$\alpha$-monoolefins by polymerizing the monomer or monomers at from 30 to 200° C under pressures of from 0.1 to 200 bar by means of a Ziegler-Natta catalyst comprising (I) a titanium chloride component and (II) an aluminium alkyl component of the general formula $AlR_3$ or $ClAlR_2$, where R is $C_1-C_8$-alkyl, in the atomic ratio of titanium from catalyst component (I) to aluminium from catalyst component (II) of from 1 : 1 to 1 : 100, characterized in that the titanium chloride component (I) employed is obtained by exposing a relevant conventional catalyst component consisting, or substantially consisting, of titanium trichloride or titanium tetrachloride to a carbon dioxide atmosphere at a pressure of from 0.1 to 10 bar, at from −20 to 100° C, for a period of from 0.5 to 60 minutes.

**Revendication**

Procédé pour la préparation d'homo- et de copolymères d'$\alpha$-monooléfines en $C_2$ à $C_6$ par polymérisation du ou des monomères à des températures se situant dans la gamme de 30 à 200°C, sous des pressions comprises entre 0,1 et 200 bars, au moyen d'un catalyseur de Ziegler-Natta se composant de : (I) un élément chlorure de titane et (II) un élément aluminium-alcoyle de formule générale $AlR_3$ ou $ClAlR_2$ — dans laquelle R est mis pour un radical alcoyle en $C_1$ à $C_8$ — dans le rapport atomique du titane de l'élément (I) du catalyseur à l'aluminium de l'élément (II) du catalyseur de 1 : 1 à 1 : 100, caractérisé en ce que l'élément chlorure de titane (I) utilisé est un élément que l'on obtient en exposant un élément de catalyseur usuel à cet effet, formé de tri- ou de tétrachlorure de titane ou se composant essentiellement de tri- ou de tétrachlorure de titane, à une atmosphère d'anhydride carbonique dont la pression se situe dans la gamme de 0,1 à 10 bars, à une température comprise dans la gamme de −20 à 100° C, pendant un laps de temps de l'ordre de 0,5 à 60 minutes.